Europäisches Patentamt

**European Patent Office**

Office européen des brevets

(11) Publication number: **0 131 532**
**A2**

(12) # EUROPEAN PATENT APPLICATION

(21) Application number: **84630056.4**

(22) Date of filing: **03.04.84**

(51) Int. Cl.⁴: **D 21 D 1/30**

(30) Priority: **18.04.83 US 486006**

(43) Date of publication of application:
**16.01.85 Bulletin 85/3**

(84) Designated Contracting States:
**DE FR GB IT NL SE**

(71) Applicant: **BELOIT CORPORATION**
**P.O. Box 350**
**Beloit Wisconsin 53511(US)**

(72) Inventor: **Mathew, John B.**
**863 West Street**
**Pittsfield Massachusetts 01201(US)**

(72) Inventor: **Kirchner, Edward C.**
**143 Churchill Street**
**Pittsfield Massachusetts 01201(US)**

(74) Representative: **Weydert, Robert et al,**
**Office Dennemeyer S.à.r.l. 21-25 Allée Scheffer P.O. Box**
**41**
**L-2010 Luxembourg(LU)**

(54) Flexible disk refiner and method of reducing particulate material.

(57) An apparatus and method for reducing particulate material such as paper making pulp between radially extending relatively rotatable and axially interfacing refining surfaces (25, 27) between which the material must pass while being refined during relative rotation of the surfaces (25, 27). The refining surfaces are mounted on resiliently flexible disks (D, P) for operating pressure responsive adjustment of the relatively rotating refining surfaces (25, 27) axially relative to one another, for attaining optimum material refining results from the refining surfaces (25, 27).

FIG. 3

EP 0 131 532 A2

Croydon Printing Company Ltd.

TITLE MODIFIED
*see front page* -1-

Flexible disk refiner and method

The present invention relates to machines for effecting a refining treatment of materials, and more particularly refining fibrous pulp materials for the manufacture of paper or paperboard.

Present methods of refining paper stock, as it comes from the beaters, digesters, or other pulping machines, involve usually passing the stock between grinding or refining surfaces which break up the fibrous materials and effect some further separation and physical modification of the fibers.

Typical pulp refiners or grinders, such as disclosed in U.S. Patent 3,371,873, have a rotating disk provided on one or both sides with annular refining surface means. The disk refining surfaces face non-rotating annular grinding surfaces and define refining zones in which the pulp is worked. The rotating disk and its refining surfaces are made of a relatively inflexible material, such as cast iron or ni-hard stainless steel. The non-rotating grinding surfaces are made of like material and rigidly mounted so as to resist the torque created by the rapidly rotating disk and the pressure on the pulp material passing through the refining zone gap. Axial adjustment of the refining zone gaps is effected by axial shifting of the shaft on which the disk is mounted.

These rigid disk refiners must be manufactured and assembled to exacting tolerances in order to rigidly set the refining zone gap widths. Because the structural loads applied during the refining process to the rigid disk are large, a bulky and extremely rugged design is necessary so that the refining surface relationships do not change under load. This results in the rigid disk refiners being very costly due to the necessarily close tolerance machining, the need for large quantities of high strength disk material, the bulky overall structure, the restricted machine capacity, and the excessive assembly time requirements.

An object of the present invention is to avoid the rigidity constraints typically heretofore required for rotary disk refiners and like apparatus. As a result, massive support and alignment structures may be eliminated, a less costly refiner machine can be produced, and greater capacity and efficiency attained without increasing envelope or housing size or power requirements as compared with conventional systems.

To this end, the present invention provides in an apparatus for reducing particulate material between a plurality of radially extending relatively rotatable and axially confronting refining surfaces between which the material must pass while being refined during relative rotation of the surfaces, and means for effecting flow of the material radially between and across the surfaces, the improvement comprising resiliently flexible refining surface supporting means permitting operating pressure responsive adjustment of the relatively rotating refining surfaces axially relative to one another for attaining optimum material working results from the refining surfaces.

The invention also provides in a method of reducing particulate material between a plurality of radially extending relatively rotatable and axially confronting refining surfaces between which the material must pass while being refined during relative rotation of the surfaces, the improvement comprising effecting flow of the material radially between and across the surfaces, and effecting operating pressure responsive adjustment of the relatively rotating refining surfaces axially relative to one another by means of resiliently flexible refining surface supporting means and thereby attaining optimum material refining results from the refining surfaces.

In more particular aspects of the present invention, a pulp refiner is provided wherein ring-shaped refining surface plates of limited radial width are mounted on interleaved margins of axially resiliently flexible or deflectable disk elements. Disk margins spaced from the interleaved margins on one set of the disk elements are secured to a rotor while the margins on another set of the disks are secured non-rotatably or counter-rotatably. The refining surface plates are adapted to be made of suitable hard, substantially rigid material. On the other hand, the disk elements are adapted to be made of axially resiliently flexible material which strongly resists deformation in radial and circumferential directions. As a result of the manner in which the axially flexible disk elements are supported, automatic axial self-adjustment of the refining surfaces is effected during the pulp refining process for attainment of optimum refining action by the relatively rotating refining surfaces.

Other objects, features and advantages of the present invention will be readily apparent from the following description of a representative embodiment thereof, taken in conjunction with the accompanying drawings, although variations and modifications may be effected without departing from the spirit and scope of the novel concepts embodied in in the disclosure, and in which:

Fig. 1 is a longitudinal sectional elevational view through a flexible disk pulp refiner constructed in accordance with the present invention;

Fig. 2 is a fragmentary, sectional elevational detail view, taken substantially along the line II-II of Fig. 1;

Fig. 3 is a fragmentary, enlarged sectional detail view taken substantially along the line III-III of Fig. 1;

Fig. 4 is a fragmentary sectional elevational detail view taken substantially along the line IV-IV of Fig. 3; and

Fig. 5 is a fragmentary, enlarged sectional detail view taken substantially along the line V-V of Fig. 3.

A flexible disk refiner assembly 10 embodies the present invention and is adapted for reducing and fibrillating various fibrous materials into individual fibers. The assembly 10 is particularly adapted for use in the paper making industry for refining wood pulp in preparing paper making stock. Although shown as a single unit, the refiner assembly 10 may be one of a series of refiners employed where in the pulp refining process the pulp fibers must be progressively reduced.

In a preferred arrangment, the assembly 10 includes a stationary, chambered housing 11 in which a shaft 12 is supported for rotation on conventional bearing means including a bearing structure 13, and is adapted to be driven by a suitable motor (not shown). A stub 14 is provided on the free end of the shaft 12, and a hub or rotor 15 mounted on the stub is held by key means 16 corotative with the stub.

Within the housing there is defined a refining, working chamber 17 into which the shaft stub 14 projects and within which the rotor 15 is operative for effecting rotation of part of a pulp fiber refining means A to which pulp stock is desirably directed by way of an inlet 18 coaxial with the hub 15. The pulp stock is delivered to the inlet 18 by means of a pipe 19 which desirably has its passage 20 coaxial with the hub 15. After treatment by the refining means A, the refined pulp stock is adapted to leave the working chamber 17 by way of a tangential or radial outlet 21 defined by outlet structure 22 at the perimeter of the chamber 17. It may be noted that while the flow pattern for the stock through the working chamber 17 is shown as from the inlet 18 to the outlet 21, the flow may, if preferred, be reversed so that the outlet 21 becomes an inlet and the inlet 18 becomes an outlet, because the refining action of the refining means A does not depend upon the particular direction of flow under hydraulic pressure.

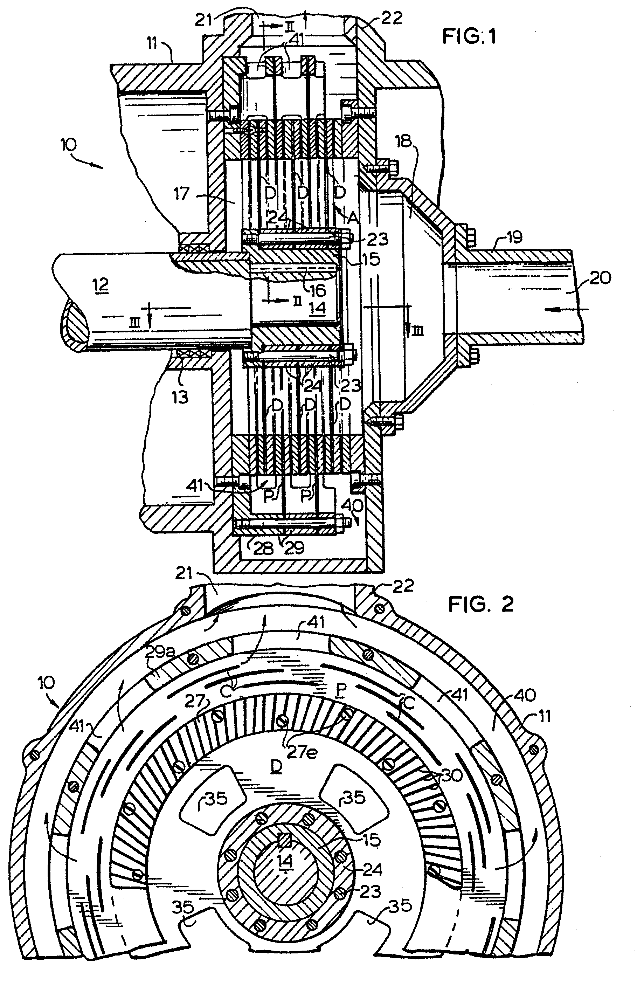

In a preferred construction, the refining means A comprises at least one rotor mounted disk D (Figs. 1, 3 and 4), but there may as many of the disks D as preferred for any particular installation, three being shown herein by way of example. Central clearance holes in the disks D enable mounting of the disks on the hub 15. Clamping ring and bolt means comprising bolts 23 secure the inner margins of the disks D to the rotor. Ring spacers 24 serve to maintain predetermined axial spacing of the disks. Adjacent to one end of the rotor 15 the bolts 23 are desirably threadedly engaged with an annular attachment flange 15a or the rotor 15. At the opposite end of the rotor 15 the bolts 23 carry nuts 23a threaded thereon and driven against an annular retainer ring 15b engaging the end of the hub 15 and thrusting against a clamping ring 24a engaging the adjacent disk margin and thrusting it against the contiguous spacer 24 and so on toward the shoulder provided by the flange 15a.

Each of the disks D carries on each side of its radially outer margin radially extending refining surfaces provided by means of respective ring-shaped refining plates 25 which may be secured as by means of screws 25a to one another and concentrically to the associated disk margin sandwiched therebetween.

Cooperating in substantially interleaved relation with the refining surface plates 25, and providing therewith radially extending refining gaps or zones 26, are coaxial ring-shaped and preferably radially coextensive refining surface plates 27 carried on inner margins of disks P. A pair of the plates 27 is secured to the sandwiched carrying disk margin by means such as screws 27e (Fig. 2). At their radially outer margins the disks P are secured by means of bolts 28 to a clamping and spacer ring structure comprising an intermediate spacer ring 29, and an axially extending annular spacer flange 29a on a radially extending plate 29b bolted to the housing 11 and to which one end of the bolts 28 are secured. At the opposite ends of the bolts 28, nuts 28a threaded on the bolts thrust a clamping ring 29c axially toward the intermediate ring 29.

Thereby the disks P are marginally clamped in a stator relation to the rotor relation of the disks D.

It should be remembered, however, that although the two sets of disks D and P are in a rotor/stator relationship, a reverse relationship may be provided if preferred, wherein the disks D are in a stator relationship to a rotor relationship of the disks P. Also, if preferred, one of the sets of disks D and P may be caused to rotate in one rotary direction and the other set of disks P may be caused to rotate in the opposite rotary direction. In principle, however, it is necessary in the refining process for there to be relative rotation of the disks D and P, and more particularly relative rotation of the refining surfaces on the plates 25 on the one hand and the confronting refining surfaces on the plates 27 on the other hand.

In order to complete the refining surface relationship at the opposite axial ends of the refining means A, a refining surface plate 27a is secured as by means of screws 27b to the ring plate 29b whereby to provide a refining gap 26 with the juxtaposed refining plate 25 surface. At the axially opposite end of the refining means A, a refining plate 27c is secured as by means of screws 27d to a mounting ring plate 11a secured as by means of screws 11b to the adjacent wall of the housing defining the inlet side of the working chamber 17. Through this arrangement, all of the fibrous stock or slurry that enters the working chamber 17 through the inlet 18 must pass through the refining zones 26 defined by the relatively rotatable and axially confronting refining surfaces provided by the plates 25 on the one hand and the cooperating plates 27, 27a and 27c on the other hand.

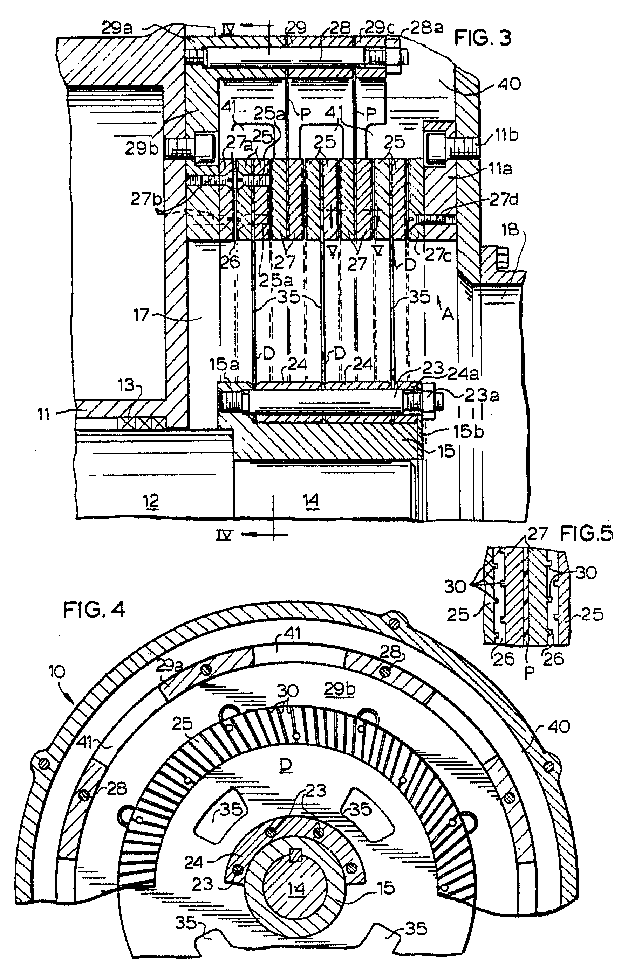

In order to enhance the refining action of the refining surfaces of the plates 25 and 27, the refining surfaces of the plates 25 have a continuous array of generally radially extending narrow ribs 30 and alternating substantially wider grooves, and the refining surfaces of the refining plates 27 have a similar annular array of narrow generally radially extending narrow refining ribs 30 and intervening wider grooves. Enhanced refining action is attained by having the ribs 30 on the refining surfaces of the ring plates 27 biased diagonally in one circumferential direction, as shown in Fig. 2, while the refining ribs 30 on the refining surfaces of the ring plates 25 are diagonally biased in the opposite circumferential direction, as seen in Fig. 4.

In order to attain substantially equal flow of the particulate material to be reduced, i.e. paper making pulp stock, to each of the refining surface zones 26, the rotor disks D have flow openings 35 therethrough in a circumferentially spaced array. For low consistency stock the holes 35 may be of substantially the same size in all of the disks D. For higher consistency stock the holes 35 may vary in size from largest size in the disk nearest to the inlet 18 and then progressively smaller holes in the disks progressively spaced from the disk which is nearest to the inlet.

Radially outwardly relative to the cooperating refining plates 25 and 27, means are provided for collecting and promoting flow of the refined material to the outlet 21. To this end, an annular collecting subchamber 40 is provided about the radially outer side of the refining plate and disk structure A, and in which the refined material is collected and directed to the outlet 21. In order to enhance radial flow from the downstream edges of the refining zones 26, to the relatively unobstructed radially outermost area of the collecting subchamber 40, the members of the clamping ring structure comprising the spacers 29 and 29a and the clamping ring 29c, are desirably provided with circumferentially spaced throughflow passage openings 41.

According to the present invention, the disks D and P provide resiliently flexible mounting means for the refining plates 25 and 27 permitting operating pressure responsive adjustment of the relatively rotating refining surfaces of the refining plates axially relative to one another for attaining optimum material refining results from the refining surfaces. To this end, the disks D and P desirably comprise relatively thin wall material having a high strength to modulus of elasticity ratio such as Scotchply reinforced plastic type 1002 Crossply or other suitable material such as spring stainless steel or fiberglass, or the like. Selection of material and thickness should be such that the disks are capable of axial resilient deflections, but possessed of thorough resistance to radial and circumferential deflection so as to effectively withstand torque and centrifugal loads in operation. On the other hand, the refining plates 25 and 27, 27a and 27c are desirably made from a relatively hard and relatively inflexible wear resistant material such as ni-hard stainless steel, ceramic, or the like. It may be noted that the rotor disks D are about three times wider that the plates 25, and the, in this instance stator, disks P are at least twice as wide as the plates 27. This affords ample areas of the respective disks D and P for resilient flexing adjustment to maintain a desirably substantially equalized relationship between the confronting refining surfaces of the plates 25 and 27 during refining operation. The need for extreme tolerance minimization of critical components of the refining means A is thus avoided, with substantial economic benefits. With respect to the disks D resilient flexibility is enhanced by the flow-through openings 35. In respect to the disks P a pattern of circumferentially extending slits or slots C (Fig. 2) is provided therein for enhanced axial resilient flexibility. As shown, the slots C are preferably arranged in circumferentially staggered and radially spaced relation to one another.

Although a preferred spacing condition for each of the refining zones 26 may be calculated and maintained by proper selection of spacers and mounting members in the assembly, especially where the refining means A is specifically adapted for refining continuously a particular grade of the particulate material to be refined, it may be desirable for situations where different grades of the material must be refined from time to time in the same refiner to provide a conventional loading mechanism (not shown) for setting the axial dimensions of the refining zone gaps 26 whereby to attain the maximum yield for the particular material to be refined. In any event, in the operation of the refiner, the axial resilient flexibility of the disks D and P enables the refining plates 25 and 27 to attain efficient self-alignment and self-centering for uniformity of refining action between the refining surfaces, in response to dynamic fluid pressure exerted by the material caused to traverse the confronting refining surfaces during relative rotation of the refining plates 25, 27, 27a and 27c.

It will be understood that variations and modifications may be effected without departing from the spirit and scope of the novel concepts of this invention.

**0131532**

Claims

1. Apparatus for reducing particulate materials such as paper making pulp comrising:

a housing (11) defining a working chamber (17) having an inlet (18) and an outlet (21) for flow of particulate material through said working chamber (17);

a rotary shaft (12) supported by said housing (11) and having a rotor (15) mounted on the shaft (12) within said working chamber (17);

characterized in having:

a radially extending annular axially resiliently flexible disk (D) mounted fixedly on said rotor (15) for rotation therewith in said chamber (17) and having on a perimeter of the disk spaced substantially from said rotor (15) at least one annular refining surface (25);

a complementary refining surface (27) mounted within said chamber (17) and cooperating in confronting relation with said refining surface (25) on said disk (D), the refining surfaces being adapted for relative rotation so that particulate material flowing through said working chamber (17) and between said refining surfaces is refined;

said disk (D) having resilient flexibility enabling self-adjustment of the confronting relationships between said refining surfaces responsive to dynamic fluid pressure of the flowing material.

2. Apparatus according to claim 1;

characterized in having

a stator carried by said housing (11) within said working chamber (17) and mounting said refining surface cooperating with said disk-carried refining surface.

3. Apparatus according to claim 1, characterized in that said rotor (15) mounted disk (D) comprises one of a plurality of similar axially resiliently flexible disks (D) carrying respective refining surfaces and all mounted on said rotor (15) spacers (24) maintaining said disks (D) in axially spaced relation to one another on said rotor (15), and said complementary refining surface comprising one of a plurality of like refining surfaces all supported on second resiliently flexible disks (P) disposed in partially interleaved relation to said rotor (15) mounted disks (D) and extending radially in the opposite direction from said rotor (15) mounted disks (D), and intermediate rings (29) supporting said second disks (P) in axially spaced relation to one another and for relative rotary cooperation with said rotor (15) mounted disks (D).

4. Apparatus according to claim 1, characterized in that said resiliently flexible mount comprises a disk element (D, P) which is axially resiliently flexible but resistant to radial and circumferential forces.

5. Apparatus according to claim 3, characterized in that all of said disks (D, P) have slots (35; C) for enhancing the axially resilient flexibility of the disks (D, P).

6. Apparatus according to claim 1; characterized in having a housing (11) about said disks (D, P) defining refining chamber (26) providing a flow path across said refining surfaces (25, 27).

7. Apparatus according to claim 3, characterized in having means for enhancing flow-through of the particulate material in said working chamber (17) past said rotor (15) carried disks (D) and then past said second disks (P) after passing said cooperating refining surfaces (25, 27)

8. Apparatus according to claim 1; characterized in that said disks (D, P) comprise relatively thin modulus section materials selected from reinforced plastic, fiber glass and spring stainless steel, and said refining plate means (25, 27) comprises wear resistant material selected from ni-hard stainless steel and ceramic.

9. Apparatus according to claim 1; characterized in that said disks (D, P) have annular margins at their radially outer perimeters and annular margins at their radially inner perimeters for mounting the disks (D, P) in said apparatus.

10. In a method of reducing particulate material between a plurality of radially extending relatively rotatable and axially confronting refining surfaces (25, 27) between which the material must pass while being refined during relative rotation of said surfaces (25, 27) the improvement comprising:

effecting flow of the material radially between and across said refining surfaces (25, 27); characterized by

effecting operating pressure responsive adjustment of the relatively rotating refining surfaces (25, 27) axially relative to one another by means of resiliently flexible refining surface supporting means (D, P) and thereby attaining optimum material refining results from said refining surfaces (25, 27).

11. A method according to claim 10, characterized by mounting at least one (25) of said refining surfaces (25, 27) on a radially extending axially resiliently flexible disk (D), whereby the dynamic fluid pressure of the flowing material is adapted to attain said adjusting by resilient flexing of said disk (D).

12. A method according to claim 10, characterized in that said refining surfaces (25, 27) comprise a plurality of surfaces (25) carried by axially spaced and resiliently axially flexible disks (D) secured fixedly to a rotor (15) and partially interleaved with corresponding axially resiliently flexible disks (P) fixed to a stator structure (11), said refining surfaces (25, 27) being in interleaved relation on the interleaved portions of said disks (D, P) and effecting substantially equalized refining zone gap relationship between the refining surfaces (25, 27) in response to dynamic fluid pressure of the material flowing through said gaps.

13. A method according to claim 10, characterized by mounting the refining surfaces (25, 27) on partially interleaved axially resiliently flexible mounting disks (D, P) and effecting said adjustment by resilient flexure
of said disks

FIG.1

FIG. 2

FIG. 3

FIG. 5

FIG. 4